# EUROPEAN PATENT APPLICATION

(11) **EP 3 199 057 A1**
(43) Date of publication of application: **02.08.2017**
(21) Application number: 16172444.8
(22) Date of filing: 01.06.2016
(51) Int. Cl.: A46B 11/00, A61C 15/04, A61C 17/22, A61C 17/34

(54) **ORAL HYGIENE DEVICE**

(30) Priority: 29.01.2016 ZA 201600642
(71) Applicant: Phillips, Adam Nigel, Lantau 999077 (HK)
(72) Inventor: Phillips, Adam Nigel, Lantau 999077 (HK)
(74) Representative: Elend, Almut Susanne

(57) **Abstract**

An oral hygiene device in the form of a toothbrush 10 comprises a handle section 12, a cartridge 14 containing a cleaning composition held under gas pressure, an actuating mechanism 16 and a head section 18. The cartridge has a discharge opening at a front end thereof, which includes a control valve 26 comprising a valve stem 27. The actuating mechanism 16 includes a plunger 40 and a lever formation 38 which acts on the plunger. The lever formation is acted upon by a hand-operated actuating button 56 for dispensing the plunger rearwardly for depressing the valve stem 27 for releasing cleaning composition from the cartridge causing the cleaning composition to be conveyed under gas pressure along passage 48 of the valve stem and into passages 46, 32, 37 and 29 where it is discharged via opening 31 at a distal end of the head section 18 onto bristles 28.

## Description

### FIELD OF INVENTION

This invention relates to an oral hygiene device.

### SUMMARY OF INVENTION

According to the invention there is provided a oral hygiene device including:
a handle section;
a cartridge containing a cleaning composition held under gas pressure, which is attached to the handle section, the cartridge having a discharge opening including a control valve for controlling flow of the cleaning composition through the discharge opening;
an actuating mechanism for actuating operation of the control valve; and
a head section which is releasably connected to the handle section, the head section having a cleaning head including at least one cleaning formation and defining a feed passage for conveying the cleaning composition, which is in flow communication with the discharge opening of the cartridge, the feed passage terminating in at least one opening proximate the cleaning formation, through which the cleaning composition is conveyed to the cleaning head.

The handle section may have a flow passage which extends between the discharge opening of the cartridge and the feed passage of the head section for conveying the cleaning composition from the cartridge to the feed passage, the flow passage and the feed passage together forming a continuous passage for conveying the cleaning composition from the cartridge to the cleaning head.

The control valve may include a valve stem having an internal passage which is mounted within the discharge opening, for controlling flow of the cleaning solution through the discharge opening.

The actuating mechanism may include an actuating lever formation and a plunger defining an internal passage which is in flow communication with the internal passage of the valve stem, the actuating lever formation being displaceable so as to apply a force to the plunger for displacing the plunger rearwardly so as to depress the valve stem, causing opening of the discharge opening of the cartridge and discharge of cleaning solution therefrom.

The handle section may include a flexible hose for conveying the cleaning solution, which is connected at one end thereof to the feed passage of the head section and at an opposite end thereof to the internal passage of the plunger.

The cleaning formation may be in the form of a cleaning brush defining a plurality of cleaning bristles.

For a cleaning formation comprising a cleaning brush, the cleaning composition may be in the form of an effervescent foam formulation.

In another embodiment, the cleaning formation may be in the form of a pair of spaced support formations and a cord of dental floss secured between the support formations.

For a cleaning formation including dental floss, the cleaning composition may be in the form of water.

The handle section and the head section may include a vibration system including vibration device for imparting a vibration at a predetermined frequency to the handle section or the head section, which may be transferred to the cleaning head for aiding a cleaning effect provided by the cleaning brush.

### BRIEF DESCRIPTION OF THE DRAWINGS

Further features of the invention are described hereinafter by way of a non-limiting example of the invention, with reference to and as illustrated in the accompanying diagrammatic drawings. In the drawings:
Figure 1 shows a front view of a oral hygiene device in accordance with the invention;
Figure 2 shows a three-dimensional view from the rear, of the oral hygiene device of Figure 1;
Figure 3 shows a side view of the oral hygiene device of Figure 1;
Figure 4 shows a sectional side view of the oral hygiene device of Figure 1, sectioned along section line IV-IV of Figure 3;
Figure 5 shows a three-dimensional view of the oral hygiene device of Figure 1, supported on a docking base with replacement cartridges and a replacement head section;
Figure 6 shows an exploded three-dimensional view of the oral hygiene device of Figure 1;
Figure 7 shows an exploded rear view of the oral hygiene device of Figure 1;
Figure 8 shows an exploded side view of the oral hygiene device of Figure 1;
Figure 9 shows an enlarged fragmentary partly sectional side view of the actuating mechanism and cartridge of the oral hygiene device of Figure 1, in an arrangement wherein the actuating mechanism is in an inoperative configuration;
Figure 10 shows an enlarged fragmentary partly sectional side view of the oral hygiene device of Figure 1, in an arrangement wherein the actuating mechanism is in an operative configuration for discharging the cleaning solution from the cartridge;
Figure 11 shows a sectional side view of another embodiment of a oral hygiene device in accordance with the invention, including a vibration device;
Figure 12 shows a side view of yet another embodiment of a oral hygiene device in accordance with the invention, having a flossing cord; and
Figure 13 shows a front view of the oral hygiene device of Figure 12.

### DETAILED DESCRIPTION OF THE DRAWINGS

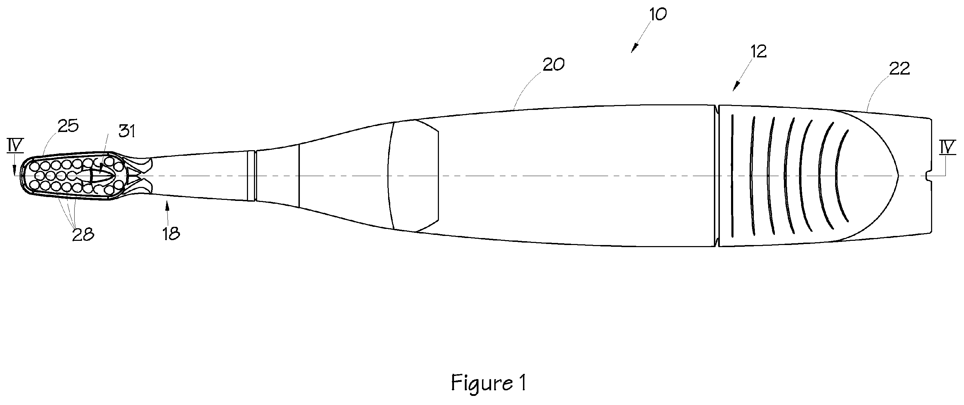

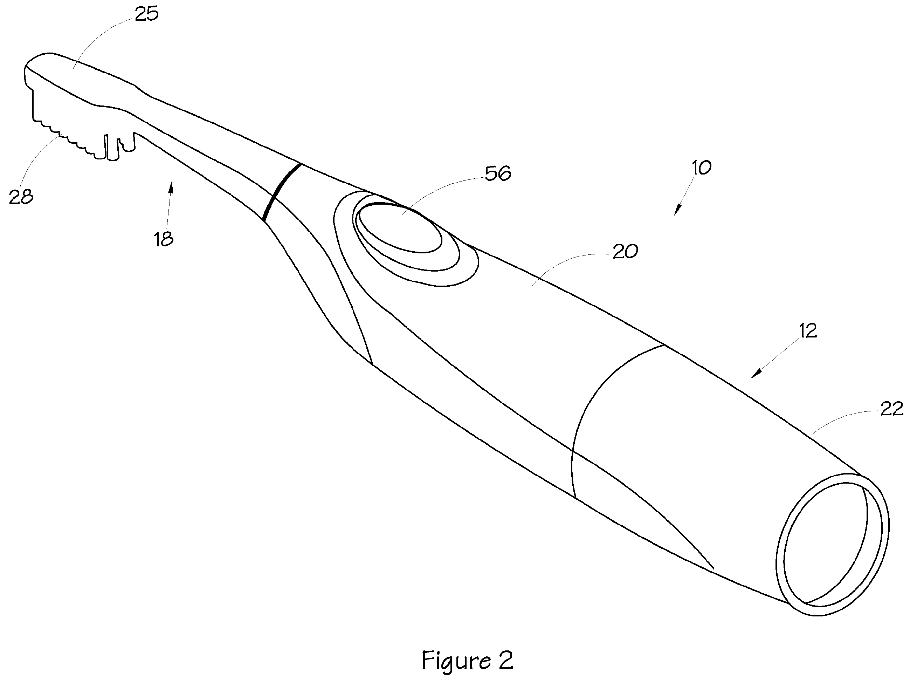

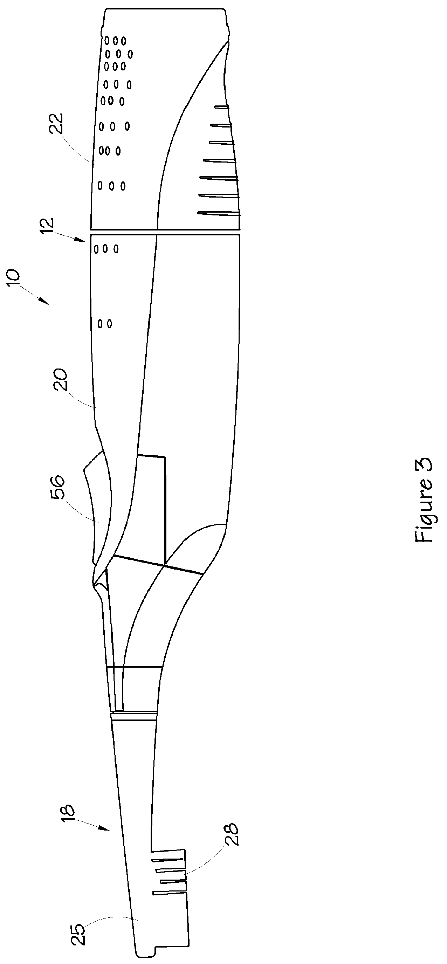

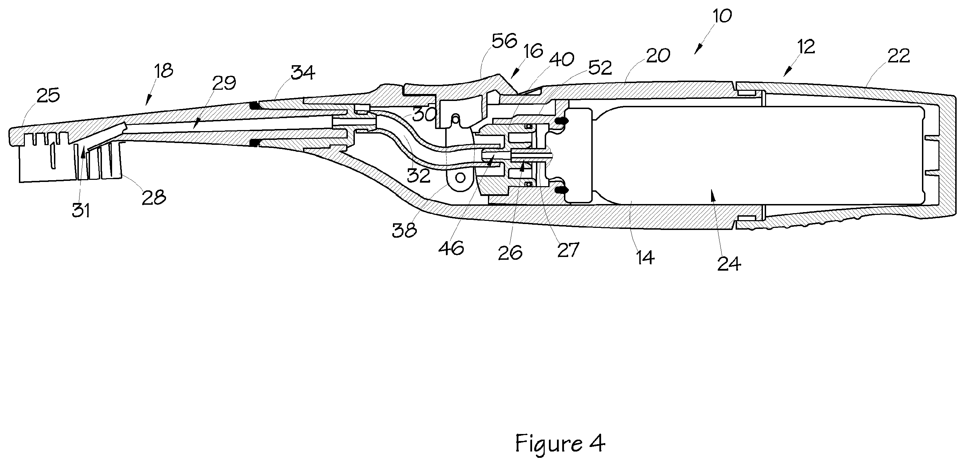

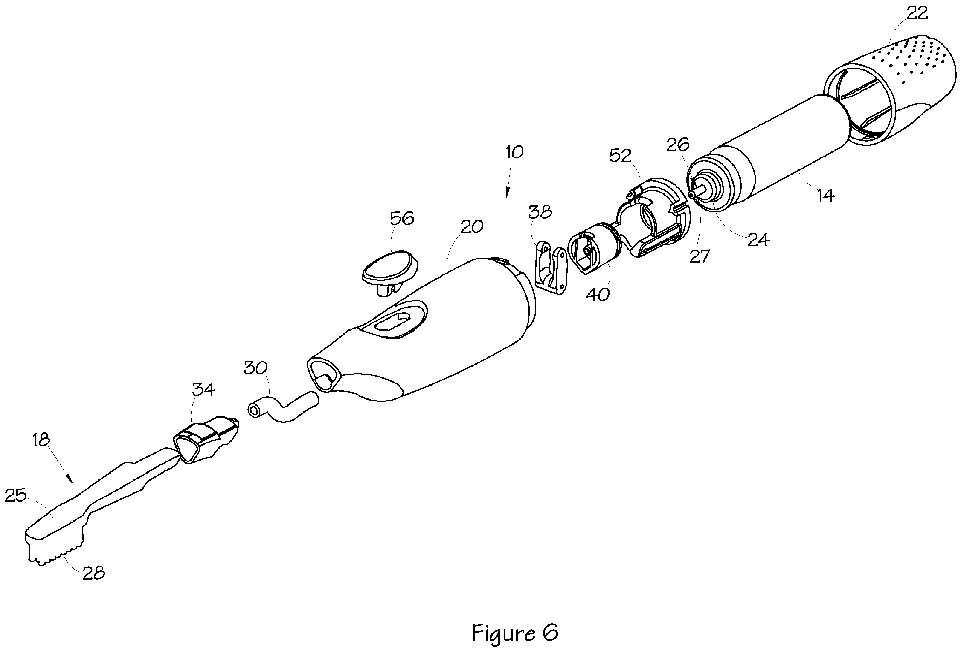

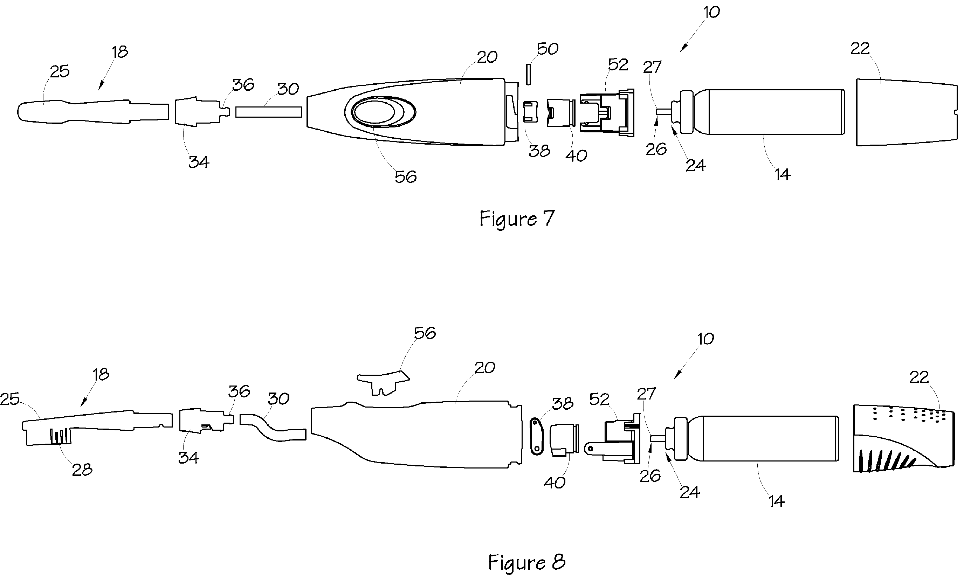

With reference to Figures 1 to 10 of the drawings, an oral hygiene device in accordance with the invention, in the form of a toothbrush is designated generally by the reference numeral 10.

The toothbrush 10 comprises, broadly, a handle section 12, a cartridge 14 containing a cleaning composition held under gas pressure, an actuating mechanism designated generally by the reference numeral 16 and a head section18.

The handle section comprises a two-part hollow casing including a main casing part 20 and an end cap 22 which is releasably connected to the main casing part 20 by means of a releasable snap lock connection. The head section 18 is also releasably connected to the main casing part 20. The main casing part 20 and the end cap 22 together define a compartment 24 within which the cartridge 14 is located, when the main casing part and the end cap are connected to one another.

The cartridge 14 contains a cleaning solution in the form of an effervescent foam formulation which has been developed specifically for its non-clogging properties. The cartridge has a discharge opening at a front end 24 thereof, which includes a control valve 26 for controlling flow of the cleaning solution through the discharge opening of the cartridge. The control valve 26 comprises a hollow valve stem 27 which is mounted within the discharge opening of the cartridge. The valve stem 27 is biased outwardly by a spring.

The head section 18 has a cleaning head 25 including a cleaning brush having a plurality of cleaning bristles 28, at a distal end of the head section and defines an internal feed passage 29 for conveying the cleaning composition. The feed passage terminates in an outlet opening 31 which is located in the vicinity of the bristles through which the cleaning composition is discharged onto the bristles.

The handle section includes a rubber hose 30 which defines a flow passage 32 for the cleaning composition. A distal end of the handle section has a snap lock fitting 34 for releasable connection to the head section 18. A distal end of the hose 30 is connected to a hose connector 36 of the snap lock fitting 34. The hose connector 36 defines an internal flow passage 37. When the head section 18 is connected to the main casing part 20 of the handle section, the flow passage 32 and the feed passage 29 of the head section are aligned and together form a continuous passage for conveying the cleaning composition to the bristles 28.

The cleaning composition is in the form of an effervescent foam formulation which has anti-clogging properties and as such, does not exhibit the conduit blocking properties of conventional toothpaste.

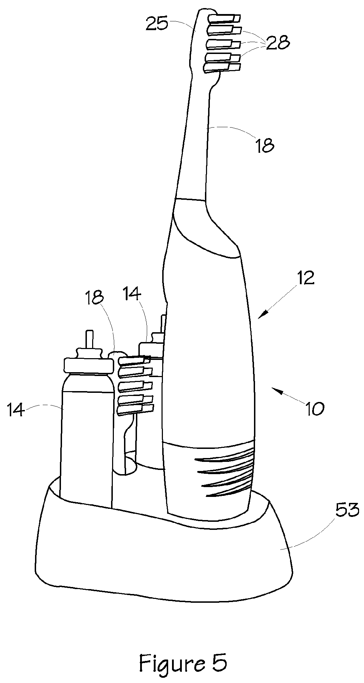

With reference to Figure 5, a docking base 53 is illustrated, the docking base having socket formations within which the toothbrush 10, and two replacement cartridges 14 and a replacement head section 18 are held.

The actuating mechanism 16 is operable to control operation of the control valve 26 so as to regulate the flow of cleaning foam from the cartridge into the flow passage 32. The actuating mechanism includes an actuating lever formation 38 comprising a pair of spaced levers and a plunger 40 which defines a socket 42 at a rear end thereof within which an end region of the valve stem 27 of the control valve 26 of the cartridge is received. A proximal end of the hose 30 is secured to a hose connector 44 of the plunger 40. The plunger 40 defines an internal passage 46 which is in flow communication with an internal passage 48 of the valve stem 27. The actuating lever formation 38 is pivotally connected to the main casing 20 of the handle section by means of a pivot pin 50 which is located at one end of the lever formation. The actuating mechanism 16 further includes a plunger guide 52 which is fixedly mounted within the main casing part 20. The plunger guide 52 defines an internal guide formation within which the plunger is displaceably received. The plunger guide 52 carries an O-ring seal 54 for forming a fluid-seal with a shoulder of the cartridge 14.

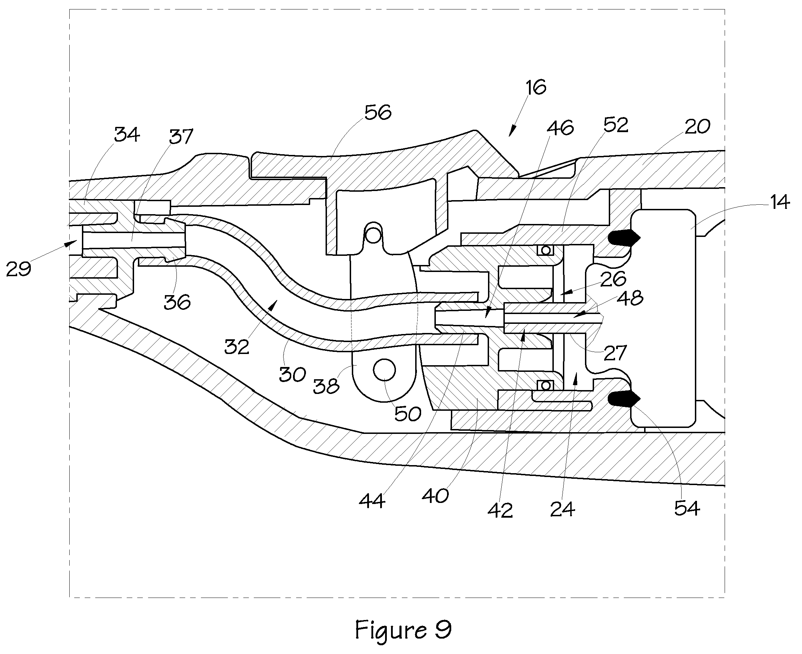

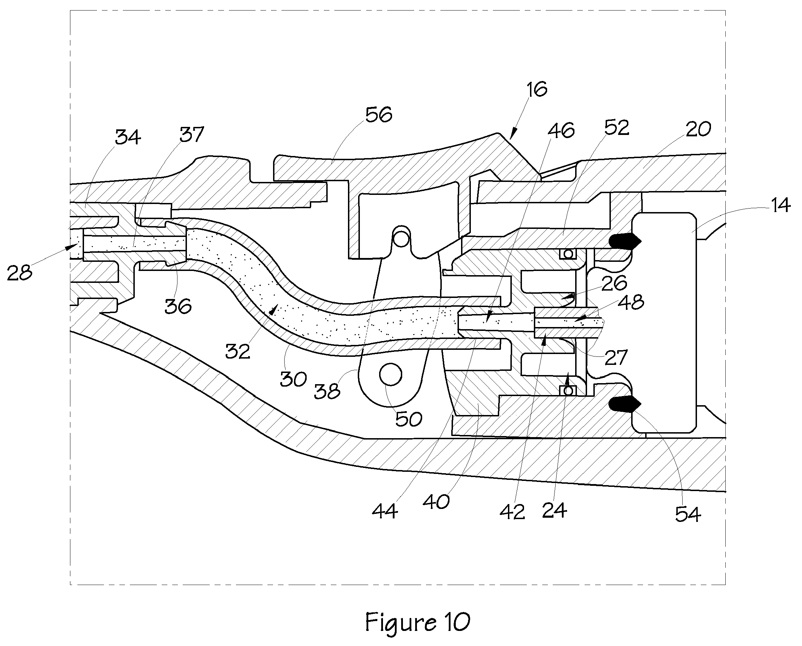

A hand-operated foam actuation button 56 is connected to the actuating lever 38 for displacing the lever between an inoperative position (shown in Figure 9) wherein the plunger 40 is in a relaxed position wherein it does not exert a force on the valve stem of the control valve and an operative position (shown in Figure 10) wherein the lever is displaced rearwardly thereby exerting a force on the plunger 40. The plunger is displaced rearwardly within the plunger guide 52, depressing the valve stem 27 of the cartridge, causing opening of the discharge opening of the cartridge thereby causing cleaning foam to be discharged therefrom. The cleaning foam is conveyed under gas pressure along the passage 48 of the valve stem into the passages 46, 32, 37 and 29 and finally discharged from the head section via the opening 31 onto the bristles 28. The plunger 40 is biased into its relaxed position as shown in Figure 9 by means of a spring, with the lever formation 38 acting against the bias of the spring in order to force the plunger 40 rearwardly to exert a force on the valve stem 27 of the control valve for releasing cleaning foam from the cartridge.

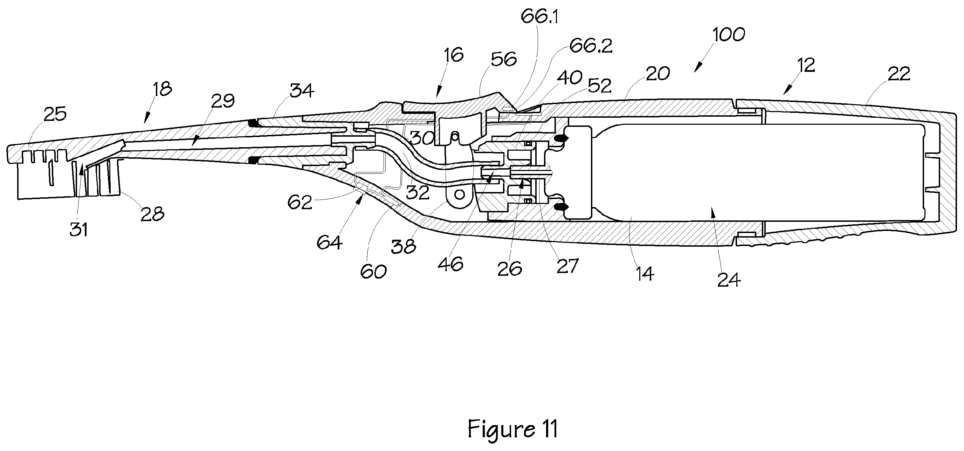

With reference to Figure 11 of the drawings, another embodiment of an oral hygiene device in the form of a toothbrush in accordance with the invention, is designated by the reference numeral 100. The toothbrush 100 is similar to the toothbrush 10 with the only difference being that the toothbrush 100 includes a vibration system for imparting a vibration at a predetermined frequency to the main casing part 20 for aiding in the cleaning of teeth by the cleansing bristles 28. In Figure 11, features of the toothbrush 100 which are the same as and / or similar to those of the toothbrush 10 are designated by the same and / or similar reference numerals.

The vibration system comprises a vibration device in the form of a vibrating motor 60 which is powered by a battery 62. The toothbrush has a closable access opening 64 providing access to a compartment within which the battery is housed. The vibration system includes electrical conductors electrically connecting the vibrating motor and the battery and a pair of electrical contacts 66.1 and 66.6 which are brought into contact via the foam actuation button 56 which serves a dual purpose for actuating dispensing of cleaning foam from the cartridge 14 and for actuating the vibrating motor.

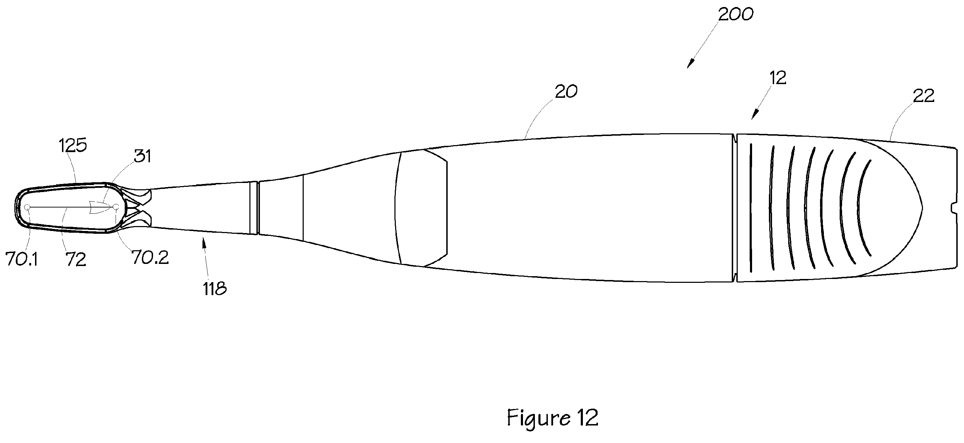

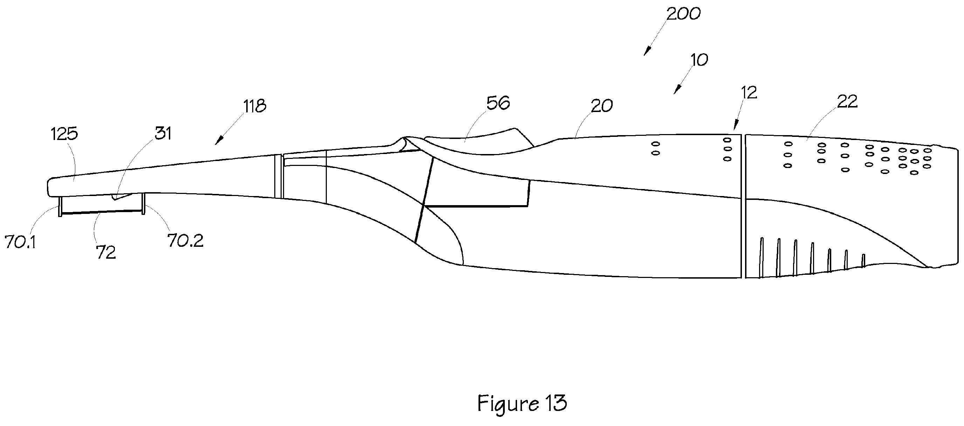

With reference to Figures 12 and 13, a further embodiment of an oral hygiene device in accordance with the invention, is designated by the reference numeral 200. The oral hygiene device 200 is similar to the toothbrush 10, with the only difference being that the cleaning bristles of the toothbrush 10 are replaced by two spaced support posts 70.1 and 70.2 for supporting a cord of dental floss 72 between them. The cleaning composition of the oral hygiene device, held in the cartridge 14 is water in this instance and not a cleaning foam.

The head section is removably connected to the handle section thereby permitting interchanging of a head section 18 having a cleaning brush with a head section 118 having a cord of dental floss supported thereon.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An oral hygiene device (10) including:
a handle section (12);
a cartridge (14) containing a cleaning composition held under gas pressure, which is attached to the handle section, the cartridge having a discharge opening including a control valve (26) for controlling flow of the cleaning composition through the discharge opening;
an actuating mechanism (16) for actuating operation of the control valve; and
a head section (18) which is releasably connected to the handle section, the head section having a cleaning head (25) including at least one cleaning formation and defining a feed passage (29) for conveying the cleaning composition, which is in flow communication with the discharge opening of the cartridge, the feed passage terminating in at least one opening (31) proximate the cleaning formation, through which the cleaning composition is conveyed to the cleaning head.

2. The oral hygiene device as claimed in claim 1, **characterised in that** the handle section (12) has a flow passage which extends between the discharge opening of the cartridge and the feed passage of the head section for conveying the cleaning composition from the cartridge to the feed passage, the flow passage and the feed passage together forming a continuous passage for conveying the cleaning composition from the cartridge to the cleaning head.

3. The oral hygiene device as claimed in claim 1 or claim 2, **characterised in that** the control valve (26) includes a valve stem (27) having an internal passage (48) which is mounted within the discharge opening of the cartridge, for controlling flow of the cleaning solution through the discharge opening.

4. The oral hygiene device as claimed in claim 3, **characterised in that** the actuating mechanism includes an actuating lever formation (38) and a plunger (40) defining an internal passage (46) which is in flow communication with the internal passage (48) of the valve stem, the actuating lever formation being displaceable so as to apply a force to the plunger for displacing the plunger rearwardly so as to depress the valve stem, causing opening of the discharge opening of the cartridge and discharge of cleaning solution therefrom.

5. The oral hygiene device as claimed in claim 4, wherein the handle section includes a flexible hose (30) for conveying the cleaning solution, which is connected at one end thereof to the feed passage (29) of the head section and at an opposite end thereof to the internal passage (46) of the plunger (40).

6. The oral hygiene device as claimed in any one of the preceding claims, **characterised in that** the cleaning formation is in the form of a cleaning brush defining a plurality of cleaning bristles (28).

7. The oral hygiene device as claimed in any one of the preceding claims, **characterised in that** the cleaning composition is in the form of an effervescent foam formulation.

8. The oral hygiene device as claimed in any one of claims 1 to 5, **characterised in that** the cleaning formation comprises a pair of spaced support formations (70.1, 70.2) and a cord of dental floss (72) secured between the support formations.

9. An oral hygiene device as claimed in claim 8, **characterised in that** the cleaning composition is in the form of water.

10. An oral hygiene device as claimed in any one of claims 1 to 6, **characterised in that** one of the handle section (12) and the head section (18) includes a vibration system including a vibration device (60) for imparting a vibration at a predetermined frequency to the head section, which is transferred to the cleaning head for aiding a cleaning effect provided by the cleaning brush.
